Europäisches Patentamt

European Patent Office

Office européen des brevets

(11) Publication number: **0 270 714**
A1

(12) **EUROPEAN PATENT APPLICATION**

(21) Application number: 86309725.9

(51) Int. Cl.4: **F16J 15/34**, F16J 15/36

(22) Date of filing: 12.12.86

(43) Date of publication of application:
15.06.88 Bulletin 88/24

(84) Designated Contracting States:
AT BE CH DE ES FR GB GR IT LI LU NL SE

(71) Applicant: **J.H. FENNER & CO. LIMITED**
**Marfleet**
**Hull North Humberside, HU9 5RA(GB)**

(72) Inventor: **Probyn, Ian Walter**
**7 Welwyn Drive**
**Salford 6 Lancashire(GB)**

(74) Representative: **Funge, Harry et al**
**M'CAW & CO. 41-51 Royal Exchange Cross**
**Street**
**Manchester M2 7BD(GB)**

(54) Rotating shaft seal assembly.

(57) A rotary shaft seal assembly (10) comprises a first shell (11) secured in a housing (12), a second shell (13) secured on a shaft (14), a stationary sealing member (15) mounted in the first shell (11) and a rotary sealing member (17) mounted in the second shell (13). In addition the seal assembly (10) comprises an intermediate member (27) located between the first shell (11) and the stationary sealing member (15) and pivotal relative to each about respective axes (32,33) which are mutually perpendicular so that the stationary sealing member (15) can adopt any angular disposition relative to the first shell (11) to allow for misalignment of the housing (12) and shaft (14).

FIG.1

(15501A)
(27.9.85)

- 1 -

## ROTATING SHAFT SEAL ASSEMBLY

The invention relates to rotating shaft seal assemblies, and in particular to such assemblies providing a seal between a housing and a shaft rotatably mounted therein.

In recent years there has been a tendency to impose more arduous operating conditions on the bearings and seals in, e.g. centrifugal pumps and compressors. There has also been a tendency to increase the length of time between service operations and to require a longer life from the above components. To these ends the use of face-type seals has almost entirely eliminated compression packing systems, and in such seals the condition of the sliding surfaces of the seal elements is of major importance in governing the life of the seal.

To compensate for non-perpendicularity of the working face of the static seat to the axis of the shaft it is known to have either or both of the static and rotary seats mounted in a floating manner in the housing and on the shaft respectively. Such seal arrangements are described in, for example, British Patents Nos. 904256, 941141, 1195132 and 1513940. However, in such arrangements the misalignment of the static seat is accommodated by increased compression of a spring or springs at one side of the seal than at the diametrically opposite side. Due to the greater force urging the

(15501A)
(27.9.85)                    - 2 -

sealing faces into mutual contact at the one side of the seal than at the diametrically opposite side, uneven wear may occur and/or leakage at the opposite side of the seal can occur.    It is an object of the present invention to provide a rotating shaft seal assembly of the face seal type which avoids at least to a substantial extent the aforementioned disadvantages.

The invention provides a rotating shaft seal assembly comprising a first annular shell adapted to be secured in a housing, a second annular shell adapted to be secured on a shaft, a stationary sealing member mounted in said first shell, a rotary sealing member mounted in said second shell, spring means operable to urge said rotary sealing member into contact with said stationary sealing member and an annular intermediate member disposed between said first shell and said stationary sealing member, said intermediate member being pivotal relative to said first shell about a first diametral axis and pivotal relative to said stationary sealing member about a second diametral axis which is angularly displaced from said first diametral axis.

Preferably said second diametral axis is perpendicular to said first diametral axis.

One embodiment of seal assembly in accordance with the invention will now be described with reference to the accompanying drawings in which:-

- 3 -

Fig. 1 is a longitudinal sectional elevation, and

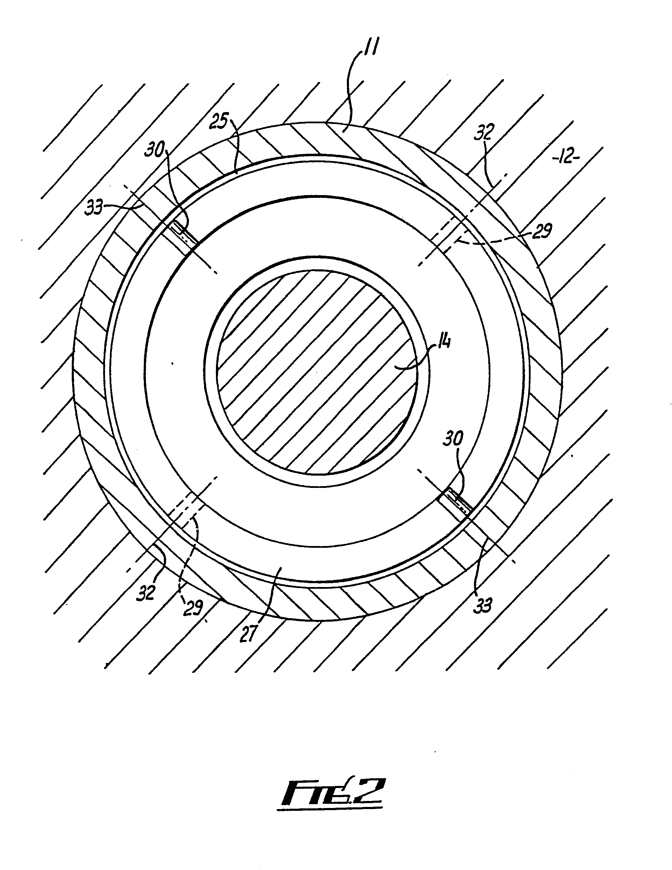

Fig. 2 is a section on line $\overline{II}$-$\overline{II}$ of Fig. 1.

Referring now to the drawings there is shown a seal assembly 10 comprising a first annular shell 11 secured in a housing 12. A second annular shell 13 is secured to a shaft 14. Mounted in the first shell 11 is a stationary sealing member or seat 15 having a sealing face 16 and mounted in the second shell 13 is a rotary sealing member or seat 17 having a sealing face 18. A diaphragm 19 of nitrile rubber or other suitable elastomer material is seated in the second shell 13 and is attached to the rotary seat 17 to seal therebetween. The rotary seat 17 may be of a carbon or other suitable material. A compression spring 20 extends between radially outwardly directed flanges 21 at the respective ends of the diaphragm 19 to urge the rotary seat 17 into contact with the stationary seat 15. An O-ring 22, or other suitable packing ring, located in an annular groove 23 in the bore 24 of first annular shell 11, seals between the shell 11 and the stationary seat 15. The ring 22 may be of a nitrile rubber or other suitable material and the stationary seat 15 may be of ceramic or other suitably hard material.

Located in the bore 24 of first shell 11, between a flange 25 thereof and the end face 26 of the stationary seat 15, is an annular intermediate member 27. In each

(15501A)
(27.9.85)                    - 4 -

end face 28 of the intermediate member 27 are two diametrically opposed, radially extending grooves 29 in which are located roller bearings 30. The grooves 29 in one face 28 are angularly displaced from those in the other face 28 by 90°, and the rollers 30 are in contact with the inwardly facing surface 31 of flange 25 or the end face 26 of the stationary seat 15.

If the first shell 11 is so located in the housing 12 that the axis of the bore 24 is angularly displaced from the axis of the shaft 14, the intermediate member 27 can pivot relative to the first shell 11 about a first axis 32 and the stationary seat 15 can pivot relative to the intermediate member 27 about a second axis 33. By this means the stationary seat 15 is able to pivot relative to the first shell 11 to any required angular disposition so that the sealing face 16 of the stationary seat 15 is perpendicular to the axis of the shaft 14, thereby ensuring that the pressure between the sealing faces 16,18 is uniform around the annular contact region. In consequence the risk of leakage between the sealing faces 16,18 at one side of the seal is reduced and the wear of the sealing faces 16,18 is uniform so as to maximise the life of the seal.

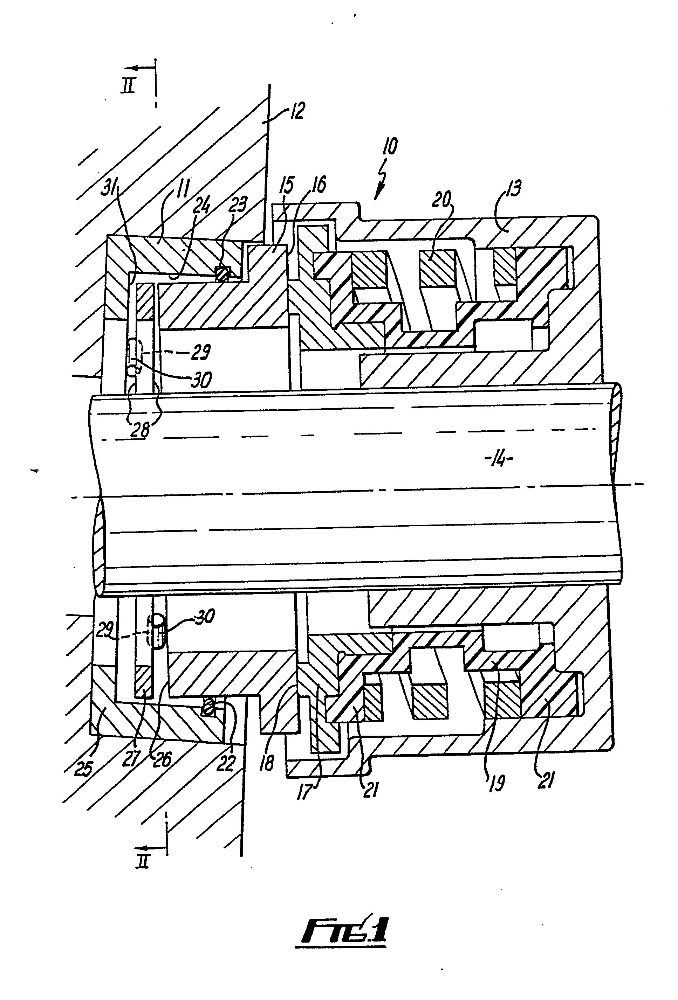

Fig. 1 shows the housing 12 and the shaft 14 misaligned to a very large extent, the angular

(15501A)
(7.11.85)                    - 5 -

mis-alignment which can be accommodated being governed by the diameter of the bearings 30 and clearance between the housing 12, shells 11, 13 and

stationary seat 15.

(EP16024)
(9.12.86)                    - 6 -

CLAIMS

1.  A shaft seal assembly comprising a first annular shell adapted to be secured in a housing, a second annular shell adapted to be secured on a shaft, a stationary sealing member mounted in one of said shells, a rotary sealing member mounted in the other of said shells, and spring means operable to urge said sealing member into mutual contact,

characterised in that

an annular intermediate member (27) is disposed between said one of said sealing members (15) and the shell (11) in which it is mounted, said intermediate member (27) being pivotal relative to said one sealing member (15) about a first diametral axis (30) and pivotal relative to said shell (11) in which said one sealing member (15) is mounted about a second diametral axis (32) which is angularly displaced from said first diametral axis (30).

2.  A shaft seal assembly according to claim 1, characterised in that

said second diametral axis (32) is substantially perpendicular to said first diametral axis (30).

3.  A shaft seal according to claim 1 or claim 2, characterised in that in

each end face (28) of said intermediate member (27) are two diametrically opposed, radially extending grooves (29), and a roller bearing (30) is located in each of said

(EP16024A)
(9.12.86)

grooves (29).

4. A shaft seal according to claim 3

characterised in that

two of said rollers (30) contact an inwardly facing surface (31) of a flange (25) of said one shell (11) and two of said rollers (30) contact an end face (26) of said stationary sealing member (15).

5. A shaft seal assembly according to any one of claims 1 to 4,

characterised in that

said stationary sealing member (15) is mounted in said first shell (11) in said housing (12) and said rotary sealing member (17) is mounted in said second shell (13) on said shaft (14).

6. A shaft seal assembly according to claim 5,

characterised in that

said intermediate member (27) is disposed between said first shell (11) and said stationary sealing member (15).

7. A shaft seal assembly according to claim 6,

characterised in that

said spring means (20) is disposed between said rotary sealing member (17) and said second shell (13).

8. A shaft seal assembly according to claim 6 or claim 7,

characterised in that

a flexible diaphragm (19) is located in said second shell (13) to seal between said second shell (13) and said rotary sealing member (17), and in that said diaphragm (19) is seated in said second shell (13) and secured to said rotary sealing member (17).

9.    A shaft seal according to claim 8, characterised in that said diaphragm (19) has radially outwardly directed flanges (21) at the opposed ends thereof, between which said spring means (20) extends.

10.    A shaft seal according to any one of claims 6 to 9, characterised in that an 0-ring (22) is located in an annular groove (23) in a bore (24) of said first shell (11) and is operable to seal between said first shell (11) and said stationary sealing member (15).

FIG.1

FIG 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 311 381 (PECH)<br><br>* Column 2, line 51 - column 4, line 34; figures 1-2 * | 1,2,6,10 | F 16 J 15/34<br>F 16 J 15/36 |
| X | US-A-2 515 410 (LAAS)<br>* Column 3, lines 23-50; figures 1-2 * | 1,2 | |
| X | US-A-2 434 589 (ROTH)<br>* Column 2, lines 16-54; figures 1-2 * | 1,2 | |
| A | DE-C- 309 656 (VULCAN)<br>* Page 2, lines 48-63; figure 4 * | 2-4 | |
| A | US-A-2 203 525 (DUPREE)<br>* Figure 20 * | 7-9 | TECHNICAL FIELDS SEARCHED (Int. Cl.4)<br><br>F 16 J |

The present search report has been drawn up for all claims

| Place of search | Date of completion of the search | Examiner |
|---|---|---|
| THE HAGUE | 18-08-1987 | LEGER M.G.M. |